(19) Europäisches Patentamt
European Patent Office
Office européen des brevets

(11) **EP 1 460 396 B1**

(12) **EUROPÄISCHE PATENTSCHRIFT**

(45) Veröffentlichungstag und Bekanntmachung des Hinweises auf die Patenterteilung:
**14.01.2015   Patentblatt 2015/03**

(51) Int Cl.:
**G01F 23/296** (2006.01)     **G01S 15/42** (2006.01)
**G01S 15/10** (2006.01)

(21) Anmeldenummer: **04005182.3**

(22) Anmeldetag: **04.03.2004**

(54) **Verfahren und Vorrichtung zur Ultraschall-Füllstandsmessung einer Flüssigkeit in einem Behälter**

Method and device for ultrasonic level sensing of a liquid in a container

Procédé et appareil pour la détection de niveau par ultrasons d'un liquide dans un récipient

(84) Benannte Vertragsstaaten:
**AT BE BG CH CY CZ DE DK EE ES FI FR GB GR HU IE IT LI LU MC NL PL PT RO SE SI SK TR**

(30) Priorität: **06.03.2003   DE 10309861**

(43) Veröffentlichungstag der Anmeldung:
**22.09.2004   Patentblatt 2004/39**

(73) Patentinhaber: **Seuffer GmbH & Co. KG**
**75365 Calw (DE)**

(72) Erfinder: **Schaller, Martin**
**75196 Remchingen (DE)**

(74) Vertreter: **Winter, Brandl, Fürniss, Hübner, Röss, Kaiser, Polte - Partnerschaft mbB Patent- und Rechtsanwaltskanzlei Bavariaring 10 80336 München (DE)**

(56) Entgegenhaltungen:
EP-A- 0 106 677     EP-A- 0 845 663
EP-A- 1 139 075     WO-A- 91/02950
DE-A- 19 648 236     US-A- 5 568 449

EP 1 460 396 B1

**Beschreibung**

Die Erfindung betrifft ein Verfahren und eine Vorrichtung zum Messen des Füllstandes einer Flüssigkeit in einem Behälter.

Aus der EP 1 139 075 A2 sind ein derartiges Verfahren und eine derartige Vorrichtung bekannt. Dabei werden in die Flüssigkeit Ultraschall-Sendeimpulse ausgesendet und an der Flüssigkeitsoberfläche (Grenzschicht-Flüssigkeit-Luft) reflektiert. Die reflektierten Ultraschall-Echosignale werden empfangen und rechnergestützt zur Ermittlung des Füllstandes ausgewertet. Dabei werden die zeitlichen Abstände der Echosignale erfasst.

Die Druckschrift EP 0 106 677 zeigt ein Messsystem zur Messung eines Flüssigkeitsstands in einem Tank, wobei Erfassungseinrichtungen, wie eine Sendeeinrichtung und eine Empfangseinrichtung zum Senden und Empfangen von Ultraschallsignalen in dem Tank angeordnet ist. Im Einzelnen kann ein Füllstand des Tanks in allgemeiner Form erfasst werden, oder es kann beispielsweise ein Füllstand eines Brennstoffs in dem Tank, sowie ein Füllstand eines weiteren Mediums, wie beispielsweise Wasser, in der Nähe des Bodens des Tanks erfasst werden. Die Ultraschallsignale werden ausgesendet und an der oberen Oberfläche der Tankfüllung, an der Bodenfläche des Tanks und an der Grenzfläche zwischen den beiden Medien in der Nähe der Bodenfläche des Tanks reflektiert. Die reflektierten Ultraschallsignale werden von der in der Nähe der Sendereinrichtung angeordneten Empfangseinrichtung empfangen und in auswertbare elektrische Signale umgewandelt. Hierbei wird eine Signalformung durchgeführt, die beispielsweise ein Filtern, eine Pegelanpassung und eine Mittelwertbildung beinhaltet. Hieraus werden Laufzeiten der reflektierten Ultraschallsignale (Echosignale) bestimmt, wobei in Abhängigkeit von den bekannten Abmessungen des Tanks und einer Temperatur der in dem Tank befindlichen Medien eine Schallgeschwindigkeit und ein Füllstand des Tanks bezüglich der einzelnen Medien bestimmt werden können.

Die Druckschrift US 5 568 449 offenbart ein Verfahren und eine Vorrichtung zur Verwendung bei der Ultraschallerfassung von Medien in einem Tank, wobei in einem mit einem vorbestimmten Medium gefüllten Tank eine Sende- und Empfangseinrichtung vorgesehen sind. In der Nähe des Tankbodens befindet sich ein weiteres Medium, wie beispielsweise angesammeltes Wasser, wobei die Sende- und Empfangseinrichtung in der Nähe des Behälterbodens und in der Nähe der Oberfläche des Wassers angeordnet ist. Die von der Sendeinrichtung ausgesendeten Ultraschallsignale werden an verschiedenen Stellen und an zusätzlich vorgesehenen Reflektoren reflektiert, durch die Empfangseinrichtung aufgenommen und in elektrische Signale umgewandelt. Vor der Auswertung werden die Signale einer entsprechenden Anpassung wie beispielswiese einer Pegelanpassung, einer Filterung und einer Gleichrichtung unterzogen, sodass ein Hüllensignal von empfangenen Echosignalen gebildet werden kann. Mittels einer Digitalisierung kann das Signal hinsichtlich der Laufzeit ausgewertet werden. Aus den Laufzeiten in Verbindung mit einer Temperatur der Medien in dem zu erfassenden Behälter kann der Füllstand bestimmt werden, da die Abmessungen des Behälters bekannt sind.

Aufgabe der Erfindung ist es, ein Verfahren und eine Vorrichtung der eingangs genannten Art zu schaffen, bei denen zusätzlich Informationen über die Beschaffenheit der im Behälter befindlichen Flüssigkeit gewonnen werden.

Diese Aufgabe wird bei der Erfindung verfahrensmäßig durch die Merkmale des Patentanspruches 1 und vorrichtungsmäßig durch die Merkmale des Patentanspruches 5 gelöst.

Die Unteransprüche beinhalten Weiterbildungen der Erfindung.

Die Ultraschall-Sendeimpulse werden in einem bestimmten Abstand von wenigstens einer reflektierenden Fläche im Behälterinnern, insbesondere im Bodenbereich des Behälters in die Flüssigkeit ausgesendet. Von den Ultraschall-Echosignalen werden die von ein und demselben Sendeimpuls generierten Echosignale ausgewertet, welche sowohl an der Flüssigkeitsoberfläche als auch an der reflektierenden Fläche reflektiert wurden. Diese Echosignale, welche in verschiedene Peaks gesplittet sind, werden zu unterschiedlichen Zeitpunkten empfangen und insbesondere unter Auswertung der zeitlichen Abstände der Peaks voneinander, zur Bestimmung wenigstens einer chemischen und/oder physikalischen Eigenschaft rechnergestützt ausgewertet.

Ein Sender und ein Empfänger, welche auch als Sender-/Empfängereinheit ausgebildet sein kann, ist in dem bestimmten Abstand von der reflektierenden Fläche bzw. den reflektierenden Flächen, welche vorzugsweise am Boden des Behälters gebildet wird bzw. werden, angeordnet. Dieser bestimmte Abstand bildet einen Referenzabstand, aus dem sich die zeitlichen Abstände, der von einem Sendeimpuls generierten Echosignale für eine bestimmte Flüssigkeit ableiten. Dieser Abstand ist in Ausbreitungs- und Reflexionsrichtung der Sendeund Echosignale vorgesehen.

Die Anordnung von Sender-/Empfänger und wenigstens einer reflektierender Fläche ist so gewählt, dass die vom Sender ausgesendeten Ultraschall-Sendeimpulse zumindest einmal an der Flüssigkeitsoberfläche und einmal der reflektierenden Fläche reflektiert werden.

Vorzugsweise wird das Verfahren und die Vorrichtung zur Bestimmung des Füllstandes von Harnstoff, insbesondere Harnstoff-Wasser-Lösung in einem Behälter oder Tank bei der nachmotorischen Reduzierung von Stickoxyden einer Brennkraftmaschine, insbesondere Dieselmotors verwendet. Mit Hilfe der Erfindung kann vor allem die Konzentration des Harnstoffes in der Lösung bei bekannter Temperatur, die gegebenenfalls mit Hilfe eines Temperaturfühlers gemessen wird, überwacht werden. Bei bekannter chemischer Zusammensetzung der Flüssigkeit ist es ferner möglich, die Temperatur aus den Abständen der gesplitteten Echosignale abzuleiten.

Anhand der Figuren wird an Ausführungsbeispielen die Erfindung noch näher erläutert.

Es zeigt

Fig. 1 schematisch eine Messanordnung eines Ausführungsbeispiels;

Fig. 2 die zeitliche Folge eines Ultraschall-Sendeimpulses und daraus resultierender Ultraschall-Echosignale; und

Fig. 3 in vergrößerter Darstellung aus Mehrfach-Reflexionen sich ergebende gesplittete Echosignale.

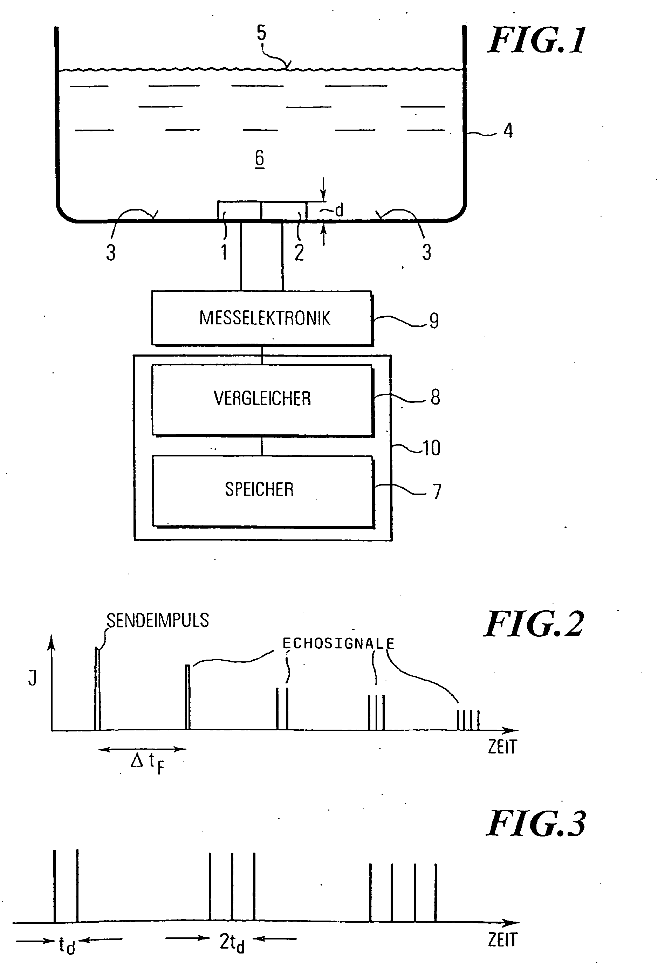

In der Fig. 1 ist ein Ausführungsbeispiel zum Messen des Füllstandes einer Flüssigkeit 6 in einem Behälter 4 dargestellt. Ein Sender 1 sendet Ultraschall-Sendeimpulse in die Flüssigkeit 6 aus. Diese Ultraschall-Sendeimpulse werden an einer Flüssigkeitsoberfläche 5 reflektiert und von einem Empfänger 2 empfangen.

Der Sender 1 und der Empfänger 2 können eine Sender-/Empfängerbaueinheit in bekannter Ausführungsform bilden.

Die Sender-/Empfängerbaueinheit 1, 2 ist in einem bestimmten Abstand d von einer reflektierenden Fläche 3, welche Ultraschall-Impulse reflektiert, angeordnet. Beim dargestellten Ausführungsbeispiel wird die reflektierende Fläche 3 am Boden des Behälters 4 gebildet. Es können im Bodenbereich auch mehrere derartige reflektierende Flächen vorgesehen sein. Der Füllstand $H_F$ ergibt sich aus dem gemessenen Zeitabstand $\Delta t_F$ zwischen dem ausgesendeten Ultraschall-Sendeimpuls und dem empfangenen, durch eine einfache Reflexion an der Flüssigkeitsoberfläche 5 sich ergebenden Ultraschall-Echoimpuls. Weitere gesplittete Echosignale entstehen durch Mehrfachreflexion an der Flüssigkeitsoberfläche 5 und an der reflektierenden Fläche 3 des Behälterbodens. Die zeitliche Folge dieser Ultraschallimpulse ist durch die in der Fig. 2 dargestellten, von einer Messelektronik 9 erfassten Messsignale wiedergegeben. Wie die Figur 1 zeigt, ist der Abstand d in Ausbreitungs- und Reflexionsrichtung der Ultraschall-Sendeimpulse und Ultraschall-Echosignale vorgesehen. Hierzu können die Sender-/Empfängerbaueinheit 1, 2 auch im Boden des Behälters 4 und die reflektierende Fläche 3 in einem Abstand d über dem Boden des Behälters 4 angeordnet sein.

Der Füllstand $H_F$ berechnet sich nach folgender Formel:

$$H_F = \frac{\Delta t_F \cdot V}{2} + d \qquad (1)$$

Hierin bedeuten

$\Delta t_F$ den zeitlichen Abstand zwischen Senden des Ultraschall-Sendeimpulses und dem Empfang des durch einfache Reflexion an der Flüssigkeitsoberfläche 5 entstandenen Ultraschall-Echosignals (Fig. 2);

V die Schallgeschwindigkeit in der Flüssigkeit 6; und

d den Abstand zwischen der Oberfläche, von welcher die Ultraschallsendeimpulse gesendet und die Echosignale empfangen werden, von der reflektierenden Fläche 3.

Aufgrund des Abstandes d ergeben sich durch Mehrfachreflexionen an der Flüssigkeitsoberfläche 5 und der reflektierenden Fläche 3 gesplittete Echosignale, welche von der Messelektronik 9 in Form mehrerer Peaks mit einem bestimmten Abstand voneinander erfasst werden, wie es in der Fig. 2 dargestellt ist. Die Messelektronik 9 erfasst sowohl den Zeitpunkt des Aussendens des Ultraschall-Sendeimpulses, als auch die Zeitpunkte des Empfangs der sich daraus ergebenden Echosignale. Die Messelektronik 9 ist hierzu an den Sender 1 und den Empfänger 2 angeschlossen. Vorzugsweise sind der Sender und Empfänger als piezoelektrische Schwinger ausgebildet.

Die verschiedenen Peaks in den Messsignalen bzw. Echosignalen, welche den sowohl an der Flüssigkeitsoberfläche 5 als auch an der reflektierenden Fläche 3 reflektierten Echosignalen entsprechen, resultieren daraus, dass die Laufzeit $t_d$ des Echoimpulses im Flüssigkeitsvolumen, das sich im Abstand d im Behälter 4 befindet, sich aus folgender Formel ergibt:

$$t_d = \frac{2d}{V} \qquad (2)$$

Da der Abstand d eine fest vorgegebene Größe ist, liefert die Messgröße $t_d$, d.h. der zeitliche Abstand zwischen den einzelnen Peaks der gesplitteten Messsignale für die mehrfach reflektierten Echoimpulse eine Aussage über die Schallgeschwindigkeit V in der Flüssigkeit. Die Schallgeschwindigkeit V hängt von physikalischen Größen der Flüssigkeit, beispielsweise der Temperatur, der Bestandteile der Flüssigkeit und bei Lösungen von der Konzentration einer in der Lösung gelösten Verbindung ab. Die Schallgeschwindigkeit V hängt auch von der chemischen Zusammensetzung der Flüssigkeit ab. Durch die Messgröße $t_d$ kann man bei beispielsweise bekannter chemischer Zusammensetzung der Flüssigkeit eine Messgröße für die Temperatur der Flüssigkeit 6 beispielsweise erhalten. Wenn die Temperatur der Flüssigkeit 6 durch einen oder mehrere Temperaturfühler bekannt ist, ergeben sich aus der Messgröße $t_d$ Informationen über Qualität, Konzentration, Zusammensetzung oder dergleichen der Flüssigkeit 6.

Eine Qualitätskontrolle kann beispielsweise mit Hilfe einer rechnergestützten Auswerteeinrichtung 10 durchgeführt werden. In einem Speicher 7 der Auswerteeinrichtung 10 sind bestimmte zeitliche Folgen der Messsignale für die gesplitteten Echosignale vorgegeben. In einem Vergleicher 8 werden die von der Messelektronik 9 erfassten aktuellen Messsignale mit den vorgegebenen Signalfolgen, die in dem Speicher 7 abgelegt sind, verglichen oder im Hinblick auf Ähnlichkeit korreliert. Hieraus gewinnt man eine Aussage über den Zustand der Flüssigkeit 6.

Ausgewertet werden hierbei die gesplitteten Messsignale (Fig. 3) für die Echoimpulse, welche wenigstens einmal an der reflektierenden Fläche 3 reflektiert wurden. In der Fig. 2 ist der vom Sender 1 ausgesendete Ultraschall-Sendeimpulse dargestellt. Diesem folgt nach einer Laufzeit $\Delta t_F$ der empfangene erste Impuls, welcher durch eine Reflexion an der Flüssigkeitsoberfläche 5 aus dem Sendeimpuls entstanden ist. In einem weiteren zeitlichen Abstand $\Delta t_F$ folgt ein einfach gesplittetes Messsignal für ein Echo, bei dem der erste Peak aus einer zweifachen Reflexion eines zwischen der Oberfläche der Sender-/Empfängereinheit und der Flüssigkeitsoberfläche laufenden Ultraschallimpulses sich ergibt. Der zweite Peak des gesplitteten Messsignals ergibt sich aus zwei Reflexionen aus der Flüssigkeitsoberfläche 5 und einer dazwischenliegenden Reflexion an der reflektierenden Oberfläche 3. Der Laufzeitunterschied zwischen dem ersten und dem zweiten Peak ergibt sich aus obiger Formel (2).

Die nachfolgenden gesplitteten Messsignale ergeben sich aus weiteren mehrfach an der Flüssigkeitsoberfläche 5 und der reflektierenden Fläche 3 reflektierten Echoimpulse, die aus demselben vorgegebenen Sendeimpuls entstanden sind.

Somit erreicht man nicht nur eine Füllstandsmessung, sondern außerdem eine Aussage über den Zustand der Flüssigkeit 6 im Behälter 4.

**[Bezugszeichenliste]**

1    Sender
2    Empfänger
3    reflektierende Fläche
4    Behälter
5    Flüssigkeitsoberfläche
6    Flüssigkeit
7    Speicher
8    Vergleicher
9    Messelektronik
10   Auswerteeinrichtung

**Patentansprüche**

1. Verfahren zur Bestimmung der Schallgeschwindigkeit in einer Flüssigkeit in einem Behälter, bei dem Ultraschall-Sendeimpulse von einem Sender, der zu der Fläche eines Behälterbodens einen bestimmten Abstand (d) aufweist, vom Behälterboden aus in die Flüssigkeit ausgesendet werden,
die Ultraschall-Sendeimpulse an der Flüssigkeitsoberfläche und dem Behälterboden mehrfach reflektiert werden,
die reflektierten Ultraschall-Sendeimpulse als Echosignale in von der Schallgeschwindigkeit (V) abhängigen und aus dem bestimmten Abstand resultierenden zeitlichen Abständen empfangen und rechnergestützt ausgewertet werden, wobei
die Echosignale infolge der Mehrfachreflexionen an der Flüssigkeitsoberfläche und dem Behälterboden in Peaks mit einem zeitlichen Abstand ($t_d$) gesplittet sind,
der zeitliche Abstand oder die zeitlichen Abstände dieser Peaks zur Bestimmung der Schallgeschwindigkeit in der Flüssigkeit ausgewertet werden, und wobei
die zeitlichen Abstände der Peaks von gesplitteten Echosignalen ausgewertet werden, die wenigstens einmal am Behälterboden reflektiert wurden.

**2.** Verfahren nach Anspruch 1, wobei ferner die zeitlichen Abstände des Empfangs der von einem bestimmten Ultraschall-Sendeimpuls generierten Echosignale für die Füllstandsmessung ausgewertet werden.

**3.** Verfahren nach Anspruch 1 oder 2, wobei die Konzentration einer als Lösung oder Mischung ausgebildeten Flüssigkeit oder die Temperatur einer Flüssigkeit bei der Auswertung bestimmt wird.

**4.** Verfahren nach einem der Ansprüche 1 bis 3, wobei die zeitliche Folge der empfangenen, gesplitteten Echosignale mit einer vorgegebenen Echosignalfolge verglichen oder korreliert wird.

**5.** Vorrichtung zur Bestimmung der Schallgeschwindigkeit in einer Flüssigkeit in einem Behälter, mit:

einem Ultraschall-Sender (2) mit einer Oberfläche, die vom Behälterboden (3) einen bestimmten Abstand (d) aufweist und ausgebildet ist zum Aussenden von Ultraschall-Sendeimpulsen in die Flüssigkeit, wobei die Ultraschall-Sendeimpulse an der Flüssigkeitsoberfläche (5) und dem Behälterboden (3) mehrfach reflektiert werden,
einem Ultraschall-Empfänger (2), welcher in dem bestimmten Abstand zum Behälterboden (3) angeordnet ist und ausgebildet ist, die reflektierten Ultraschall-Sendeimpulse als Echosignale in von der Schallgeschwindigkeit (V) abhängigen und aus dem bestimmten Abstand resultierenden zeitlichen Abständen zu empfangen, wobei die Echosignale infolge der Mehrfach-Reflexionen an der Flüssigkeitsoberfläche (5) und dem Behälterboden (3) in Peaks mit einem zeitlichen Abstand ($t_d$) gesplittet sind, und
einer Auswerteeinrichtung (10), die ausgebildet ist aus dem zeitlichen Abstand oder den zeitlichen Abständen ($t_d$) dieser Peaks die Schallgeschwindigkeit in der Flüssigkeit zu bestimmen, wobei die zeitlichen Abstände der Peaks von gesplitteten Echosignalen ausgewertet werden, die wenigstens einmal am Behälterboden reflektiert wurden.

**Claims**

**1.** Method for determining the sound velocity in a liquid in a container, in which
ultrasonic transmission pulses are transmitted from a container bottom into the liquid by a transmitter which is at a specific distance (d) from the surface of the container bottom,
the ultrasonic transmission pulses are reflected multiply at the liquid surface and the container bottom,
the reflected ultrasonic transmission pulses are received as echo signals at time intervals which are dependent on the sound velocity (V) and result from the specific distance, and are evaluated with the aid of a computer, wherein
the echo signals are split into peaks having a time interval ($t_d$) as a result of the multiple reflections at the liquid surface and the container bottom,
the time interval or the time intervals of those peaks are evaluated in order to determine the sound velocity in the liquid, and wherein
the time intervals of the peaks of split echo signals which have been reflected at least once at the container bottom are evaluated.

**2.** Method according to claim 1, wherein the time intervals of the receiving of the echo signals generated by a specific ultrasonic transmission pulse are further evaluated for level measurement.

**3.** Method according to claim 1 or 2, wherein the concentration of a liquid in the form of a solution or mixture or the temperature of a liquid is determined in the evaluation.

**4.** Method according to any one of claims 1 to 3, wherein the time sequence of the received, split echo signals is compared or correlated with a predetermined echo signal sequence.

**5.** Apparatus for determining the sound velocity in a liquid in a container, having:

an ultrasonic transmitter (2) with a surface which is at a specific distance (d) from the container bottom (3) and is configured for the transmission of ultrasonic transmission pulses into the liquid, wherein the ultrasonic transmission pulses are reflected multiply at the liquid surface (5) and the container bottom (3),
an ultrasonic receiver (2) which is arranged at the specific distance from the container bottom (3) and is configured to receive the reflected ultrasonic transmission pulses as echo signals at time intervals which are dependent on the sound velocity (V) and result from the specific distance, wherein the echo signals are split into peaks having a time interval ($t_d$) as a result of the multiple reflections at the liquid surface (5) and the container bottom (3), and

an evaluation device (10) which is configured to determine the sound velocity in the liquid from the time interval or the time intervals ($t_d$) of those peaks, wherein

the time intervals of the peaks of split echo signals which have been reflected at least once at the container bottom are evaluated.

**Revendications**

1. Procédé de détermination de la vitesse du son dans un liquide dans un récipient, dans lequel

des impulsions d'émission d'ultrasons sont émises par un émetteur, qui présente une distance définie (d) par rapport à la surface d'un fond de récipient, à partir du fond de récipient dans le liquide,

les impulsions d'émission d'ultrasons sont réfléchies plusieurs fois au niveau de la surface de liquide et du fond de récipient,

les impulsions d'émission d'ultrasons réfléchies sont reçues en tant que signaux d'écho à des intervalles temporaires, dépendant de la vitesse du son (V) et résultant de la distance définie, et sont évaluées à l'aide d'un ordinateur,

les signaux d'écho étant répartis suite aux multiples réflexions au niveau de la surface de liquide et du fond de récipient en des pics ayant un écart temporel ($t_d$),

l'écart temporel ou les écarts temporels de ces pics étant évalués pour la détermination de la vitesse du son dans le liquide, et dans lequel

les écarts temporels des pics des signaux d'écho répartis, qui ont été réfléchis au moins une fois au niveau du fond de récipient, sont évalués.

2. Procédé selon la revendication 1, les écarts temporels de la réception des signaux d'écho générés par une impulsion d'émission d'ultrason définie étant évalués en outre pour la mesure de niveau.

3. Procédé selon la revendication 1 ou 2, la concentration d'un liquide, formé en tant que solution ou mélange, ou la température d'un liquide étant déterminée lors de l'évaluation.

4. Procédé selon l'une quelconque des revendications 1 à 3, la séquence temporelle des signaux d'écho reçus, répartis étant comparée ou corrélée avec une séquence de signaux d'écho prédéfinie.

5. Appareil de détermination de la vitesse du son dans un liquide dans un récipient, comprenant :

un émetteur d'ultrasons (2) ayant une surface, qui présente une distance définie (d) par rapport au fond de récipient (3) et qui est formée pour émettre des impulsions d'émission d'ultrasons dans le liquide, les impulsions d'émission d'ultrasons étant réfléchies plusieurs fois au niveau de la surface de liquide (5) et du fond de récipient (3),

un récepteur d'ultrasons (2) qui est disposé à la distance définie par rapport au fond de récipient (3) et est formé pour recevoir les impulsions d'émission d'ultrasons réfléchies en tant que signaux d'écho à des intervalles temporels dépendant de la vitesse du son (V) et résultant de la distance définie, les signaux d'écho étant répartis suite aux multiples réflexions au niveau de la surface de liquide (5) et du fond de récipient (3) en des pics ayant un écart temporel ($t_d$), et

un dispositif d'évaluation (10) qui est formé pour déterminer, à partir de l'écart temporel ou des écarts temporels ($t_d$) de ces pics, la vitesse du son dans le liquide,

les écarts temporels des pics des signaux d'écho répartis, qui ont été réfléchis au moins une fois au niveau du fond de récipient, étant évalués.

*FIG.1*

5

4

<u>6</u>

d

3    1    2    3

MESSELEKTRONIK    9

VERGLEICHER    8

10

SPEICHER    7

*FIG.2*

SENDEIMPULS

ECHOSIGNALE

J

ZEIT

$\Delta t_F$

*FIG.3*

ZEIT

$t_d$    $2t_d$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1139075 A2
- EP 0106677 A
- US 5568449 A